# EUROPEAN PATENT APPLICATION

(11) **EP 2 586 685 A1**
(43) Date of publication of application: **01.05.2013**
(21) Application number: 12190891.7
(22) Date of filing: 31.10.2012
(51) Int. Cl.: B62J 7/08, B62J 9/00

(54) **Connecting member for fastening a holder onto a cycle luggage carrier**

(30) Priority: 31.10.2011 NL 2007675
(71) Applicant: 1T1 B.V., 1185 MX Amstelveen (NL)
(72) Inventor: van Bemmelen, Jeroen, 1185 MX Amstelveen (NL); Wassink Smit, Natha, 1011 CH Amsterdam (NL)
(74) Representative: Clarkson, Paul Magnus

(57) **Abstract**

The invention relates to a holder (140) and to a connecting member (120) for fastening the holder (140) onto a carrier rack (104) of a cycle (100). The base (122) of the connecting member has engagement members (126) which are shaped to interact with complementary engagement members (146) of the holder (140). Furthermore, the base (122) has at least two locking bodies (128) for engaging with at least two recesses (148), each having a stop surface (150), in the holder (140). The locking bodies (128) are movable between a released position, in which each locking member (128) lies free and the holder (140) can be moved in the longitudinal direction X with respect to the base (122), and a locked position, in which each locking member (128) abuts against the stop surface (150) and the holder (140) is immovable with respect to the base (122).

## Description

The invention relates to a connecting member, comprising a base which can be fastened in a substantially horizontal plane above a wheel of a cycle, for example onto a bicycle carrier rack, wherein the base comprises engagement members which are shaped to interact with complementary engagement members of a holder such that the holder can be fastened to a top side of the base.

The invention also relates to a holder arranged for fastening to a top side of a base which can be fastened onto a carrier rack of a bicycle, wherein the holder comprises complementary engagement members, which are shaped to interact with engagement members on the base such that the holder can be fastened to a top side of the base.

The invention further relates to a combination of such a connecting member and a holder.

From patent document US 5340003, a connecting member for fastening a holder onto a bicycle is known. According to one of the shown embodiments, the connecting member has a hook-shaped base which can be fastened onto the carrier rack of a bicycle with the aid of a cover plate and bolts. With the aid of a pair of bolt and wing nut joints, bushings can be fastened to side edges of the base, which bushings serve as engagement members for engagement pins of, for example, a bracket-shaped holder for a storage box.

A disadvantage of such a connecting member is that positioning of the holder onto the bicycle with the connecting member demands considerable coordination on the part of the user, since the engagement pins of the holder must be inserted with a vertical movement into relatively small holes of the bushings in order to subsequently be able to position the storage box from above into the bracket. During positioning the user needs both hands, with the result that the bicycle cannot be kept stable.

An object of the invention is hence to provide a connecting member with which increased user comfort is obtained.

This object is achieved by, according to an aspect of the invention, providing a connecting member according to the preamble to Claim 1, characterized in that the base comprises at least two locking bodies for engaging with at least two recesses in the holder, which recesses have a stop surface, wherein the locking bodies are movable between a released position, in which the holder can be moved in the longitudinal direction with respect to the base, and a locked position, in which each locking body abuts against the stop surface and the holder is immovable with respect to the base.

The engagement members in the connecting member interact with the complementary engagement members in the holder and the locking bodies on the base fall into the recesses of the holder. The holder is freely movable over the base in the longitudinal direction of the cycle as long as the locking bodies are in the released position. This horizontal movement of the holder in the longitudinal direction of the cycle as the holder is positioned onto the connecting member makes optimal use of the stability of the cycle in the longitudinal direction and thereby requires minimal coordination and effort on the part of the user. Only once the locking bodies are set in the locked position, which can be realized via, for example, an automatic mechanism or by a user pressing a button, will the holder be fixed with respect to the base. As a result, the fixing of the holder onto the bicycle carrier rack is facilitated, whilst the user can use both hands for positioning of the holder or can keep one hand free for the lateral stabilization of the cycle.

In an embodiment of the connecting member, the locking bodies are situated on both longitudinal sides of the connecting member and protude from the base in a latitudinal direction.

The provision of latitudinally protuding locking bodies on longitudinal sides of the connecting member produces a simple, robust configuration in order to realize mobility of the holder in the longitudinal direction, whilst the surface on the top side of the base remains suitable for other purposes, such as the offering of a bearing surface for a passenger if the holder is not positioned on the connecting member. The engagement members can be shaped, for example, as four rectangular protusions on the base, which protusions are oriented along the longitudinal direction and point outwards in the latitudinal direction. Such laterally protuding engagement members efficiently interact with, for example, complementary engagement members shaped as four horizontally mirrored L-shaped recesses on a bottom side of the holder. Further stop surfaces in the L-shaped holder grooves then limit the forward freedom of movement of the holder in the longitudinal direction over the base. In the locked position, this forward limitation is combined with a rearward limitation as a result of the above-described contact between the locking bodies and the stop surfaces, so that the holder is immovable with respect to the base.

According to a further embodiment of the connecting member, the locking bodies are arranged to switch from the released position into the locked position by movement of the holder in the longitudinal direction over the base, in other words, movement of the holder in the longitudinal direction over the base enables the locking bodies to switch from the released position into the locked position.

By movement of the holder in the longitudinal direction over the base, for example when the holder passes a predetermined point on the connecting member, the locking bodies are set automatically from the released position into the locked position. The horizontal movement of the holder over the base is thus sufficient to effect the locking of the holder with respect to the base, without the need for additional actions. This increases the user comfort of the connecting member.

In another embodiment, the connecting member is provided with a spring mechanism for exerting a force on the locking bodies in the direction of the locked position.

As a result of the spring mechanism, the locking bodies will automatically spring into the locked position as soon as the holder and the connecting member are mutually correctly positioned. Owing to the spring mechanism, the connecting members are preferably in the locked position, whereby the connecting members are unlikely to assume a position between the released position and the locked position. The provision of means to secure the locking bodies temporarily in the released position produces a so-called bi-stable fixing mechanism, which, in dependence on the mutual positions of the holder and the base, will switch between the locked position and the released position. As a result of the locking bodies being forced into the locked position by the spring mechanism, the user will not need to perform any extra actions when locking the holder onto the base and the user keeps a hand free to be able to stabilize the cycle.

According to a further embodiment, the connecting member is provided with a control mechanism having a control body which is provided movably with respect to the base, and is arranged to position the locking bodies in the released position.

The control mechanism having the control body which is movable with respect to the base offers the user the possibility of setting the locking bodies into the released position at any desired moment. The subsequent removal of the holder from the base is realized by simply an opposite movement of the holder in the longitudinal direction over the base. Preferably, the control body is accessible to the user both in the absence and in the presence of the holder on the base.

According to an embodiment of the connecting member, the locking bodies in the locked position are extendable in the latitudinal direction into an extended locked position, such that the locking bodies engage with deepenings in the recesses of the holder if fastened to the top side of the base.

The locking bodies can also be arranged to, in the extended locked position, additionally engage with engagement points in the base of the connecting member. The extension and engagement of the locking bodies with the deepenings in the holder, and possibly with the base, produces a robust fixed connection between the holder and the base. In the resulting extended locked position, the locking bodies are no longer movable between the released position and the locked position and the holder fastened to the top side of the base is secured.

According to a further embodiment of the connecting member, the control mechanism is provided with a locking mechanism for fixing the locking bodies in at least one of the released position, the locked position and the extended locked position.

The locking mechanism offers the user the possibility of adjusting the state of the above-described bi-stable fixing mechanism according to requirement. In addition, the locking mechanism can be operated, for example, by means of a key in order to fix the locking bodies in the extended locked position, so that an unwanted passage between the released position and the locked position is prevented. Hence, during cycling and transport of the holder, the secured holder cannot accidentally slide off in the longitudinal direction of the connecting member, whereby safety is increased.

According to another aspect and in accordance with the above-discussed effects and advantages, the invention provides a holder according to the preamble to Claim 8, characterized in that the holder comprises at least two recesses having a longitudinal guide and a stop surface for engaging with at least two locking bodies of the base, such that each locking member in a released position lies free in the longitudinal guide and the holder is movable in the longitudinal direction with respect to the base, and such that each locking member in a locked position abuts against the stop surface and the holder is immovable with respect to the base.

According to an embodiment of the holder, the complementary engagement members and the at least two recesses are provided on a bottom side of the holder.

As a result of the complementary engagement members and recesses provided on the bottom side of the holder, the possibility of positioning the holder from above onto the base is offered. This fits in with the preference for a vertical gravity-controlled positioning movement of a heavy holder, such as a filled crate, wherein considerable physical effort and coordination on the part of the user are required in order to position the holder onto the cycle without the latter falling over.

According to a further embodiment of the holder, the longitudinal guide comprises a first profile, for forcing the locking bodies into the released position if the fastened holder is moved in the longitudinal direction with respect to the base.

As a result of a spring mechanism in the connecting member, the locking bodies are forced automatically into the locked position. During movement of the positioned holder in the longitudinal direction over the base, the first profiles will apply a downward force to the locking bodies, so that these are temporarily forced into the released position. Once the first profiles have been passed, the locking bodies fall back into the locked position and stay hooked behind the stop surfaces, so that the holder is immovable with respect to the base. The effect of this configuration is that a force applied by the user to the positioned holder along the longitudinal direction results in automatic locking of the holder onto the base, with minimal operating effort on the part of the user.

In a further embodiment of the holder, the longitudinal guide comprises a second profile, for forcing the locking bodies into the locked position if the fastened holder is moved in the longitudinal direction or an opposite longitudinal direction with respect to the base.

Once the locking bodies have been positioned in the released position, for example with the aid of the control member, the second profiles will then, during movement of the positioned holder in the longitudinal direction or the opposite longitudinal direction (that is to say opposite to the above-named longitudinal direction) over the base, apply an upward force to the locking bodies, so that the locking bodies are forced back into the locked position. The second profiles therefore provide an automatic locking function for the bi-stable fixing mechanism. An effect of the second profile in the longitudinal guide is that, if a holder is initially fixed in the locked position, whereafter the locking bodies are set into the released position, and the user subsequently applies a force opposite to the longitudinal direction to the positioned holder in order to release the holder from the base, this will result in an automatic spring-back of the locking bodies into the locked position. This locked position serves as the starting position for a subsequent positioning of the holder onto the base, without the need for further actions on the part of the user. Conversely, for an unlocked holder, following positioning on top of the base and with the locking bodies in the released position, a movement in the longitudinal direction will result in the locking bodies in the locked position being forced behind the stop surfaces, so that the holder is fixed on the base. The first and/or second profiles therefore ensure desired changes of state of the bi-stable fixing mechanism.

According to an embodiment, the holder is shaped as a collapsible crate and is provided with a channel on the bottom side for receiving the connecting member.

The channel on the bottom side of the collapsible crate offers on inside walls of the channel space for the recesses and complementary engagement members and also lowers the centre of gravity of the collapsible crate with respect to the bicycle carrier rack, which promotes stability during use.

According to other aspects and in accordance with the above-discussed effects and advantages, the invention provides an assembly of an above-described connecting member and an above-described holder, and a cycle provided with such a connecting member or assembly.

Illustrative embodiments of the invention will be described below solely by way of example with reference to the accompanying schematic drawings, wherein corresponding components are denoted by corresponding reference symbols.

FIG. 1A and 1B show embodiments of a holder and a connecting member;

FIG. 2A-2D show side views of a holder fastened onto a connecting member according to embodiments.

The drawings are only intended for illustrative purposes and do not serve to limit the scope of protection which is defined by the claims.

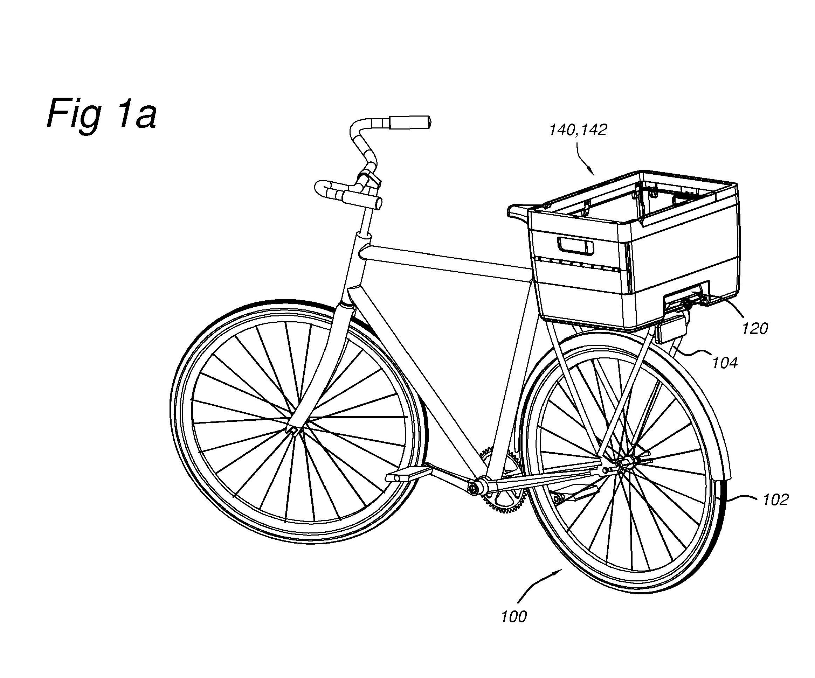

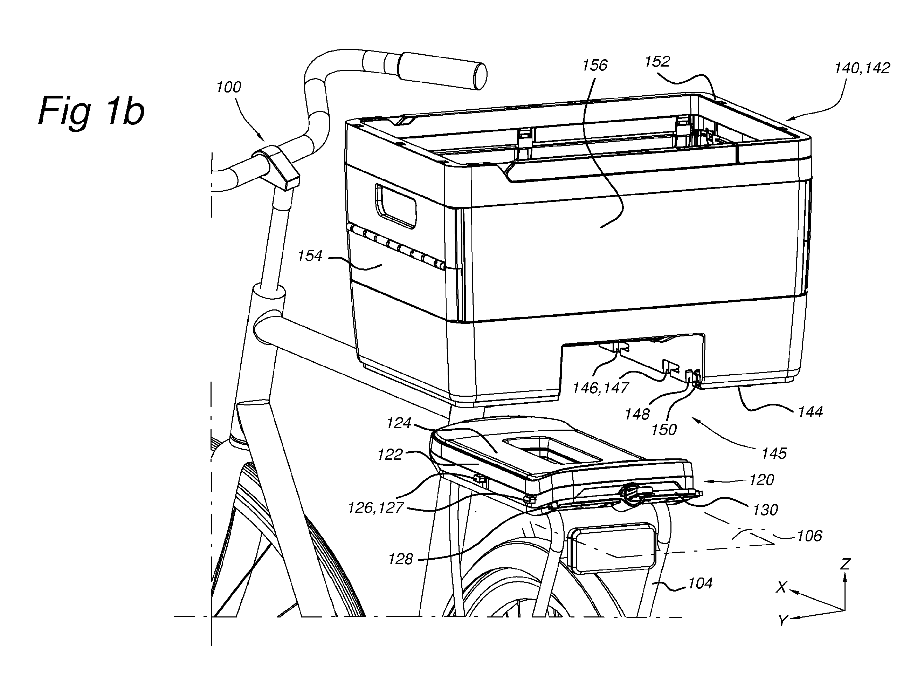

FIG. 1A and 1B show a bicycle 100 with a carrier rack 104 mounted above a rear wheel 102 of the bicycle 100. The carrier rack 104 spans a horizontal plane 106. On the carrier rack 104 is fastened a connecting member 120. The connecting member 120 is provided with a base 122, which is arranged for the releasable fastening of a holder 140, here shown as a collapsible crate 142, to a top side of the base 122. A longitudinal side of the connecting member 120 defines a longitudinal direction X. In addition, a latitudinal direction Y is defined in the horizontal plane 106 and transversely to the longitudinal direction X, and a height direction Z is defined perpendicular to the longitudinal direction X and the latitudinal direction Y. FIG. 1A shows the holder 140 fastened to the connecting member 120 and the bicycle 100. The connecting member 120 can be fixed to the carrier rack 104, for example, by means of four or more inverted U-bolts (not shown), which are fastened upwards in the height direction Z around the frame wires and/or frame tubes of the carrier rack 104 with the aid of nuts. Each U-bolt can be adjustable in the horizontal plane 106 with respect to the connecting member 120, resulting in adaptability of the fastening onto carrier racks 104 of different dimensions and wire/tube thicknesses.

In FIG. 1B, the folding crate 142 is depicted loose from the connecting member 120 and the bicycle 100, such that the top side of the base 122 is visible and that a bearing surface 124 suitable for supporting persons or objects is shown. The collapsible crate 142 has in the middle of a bottom side 144 a channel 145 along the longitudinal direction X having a shape complementary to and intended for the reception of the connecting member 120. As shown in FIG. 1B, the base 122 is provided with four engagement members 126 on longitudinal sides oriented in the longitudinal direction X, which connect to four complementary engagement members 146 on the bottom side 144 of the holder 140. The base 122 is further provided with a pair of locking bodies 128, which can be received in a pair of matching recesses 148 on the bottom side 144 of the holder 140. The engagement members 126 of the base 122 and the complementary engagement members 146 of the holder 140 are shaped and situated in the horizontal plane 106 such that the holder 140, when fastened on top of the base 122, is only movable in the longitudinal direction X with respect to the base 122. In the embodiment of FIG. 1B, the mobility in the longitudinal direction X is realized by engagement members 126 shaped as four rectangular protusions 127 on the base 122, which rectangular protusions are oriented along the longitudinal direction X and point outwards in the latitudinal direction Y, and by complementary engagement members 146 shaped as four thereto matching L-shaped grooves 147 in the holder 140. The mobility in the longitudinal direction X can also be realized in other ways, however. On a rear side of the connecting member 120 is also fitted a control mechanism 130, for possible manual changing of the position of the locking bodies 128 by a user. A bottom side of the base 122, which is directed towards the carrier rack 104, has a shape which offers space to raised edges which may be present on ends of the carrier rack 104 viewed in the longitudinal direction X. In the shown embodiments, these edge-receiving spaces are realized by constructing the ends on the bottom side of the base 122 as inclined faces with respect to the horizontal plane 106.

Both the combination of the connecting member 120 and the holder 140 as a interacting whole, and the connecting member 120 and the holder 140 as separate complementary units, are deemed to be included under the invention.

The shown holder 140 is shaped as a folding crate 142 and has a lowered centre of gravity for stabilization during cycling. The folding crate 142 is provided with a handle 152, which is extendable and is pivotable from a side edge and which, in an folded-out position, stays obliquely in the height direction Z. The collapsibility of the crate 142 is realized by a pair of mutually opposing, inwardly hinged, collapsible panels 154 and a pair of mutually opposing, inwardly hinged folding panels 156. In addition, the collapsible crate 142 is on the bottom side 144 provided with four wheels (not shown), which are partially sunk in the bottom side 144. The holder 140 can also be differently constructed, for example as a rigid crate, a basket, case or cool box, a child seat, a sports bag, golf bag or golf trolley, or a buggy carrier (not shown).

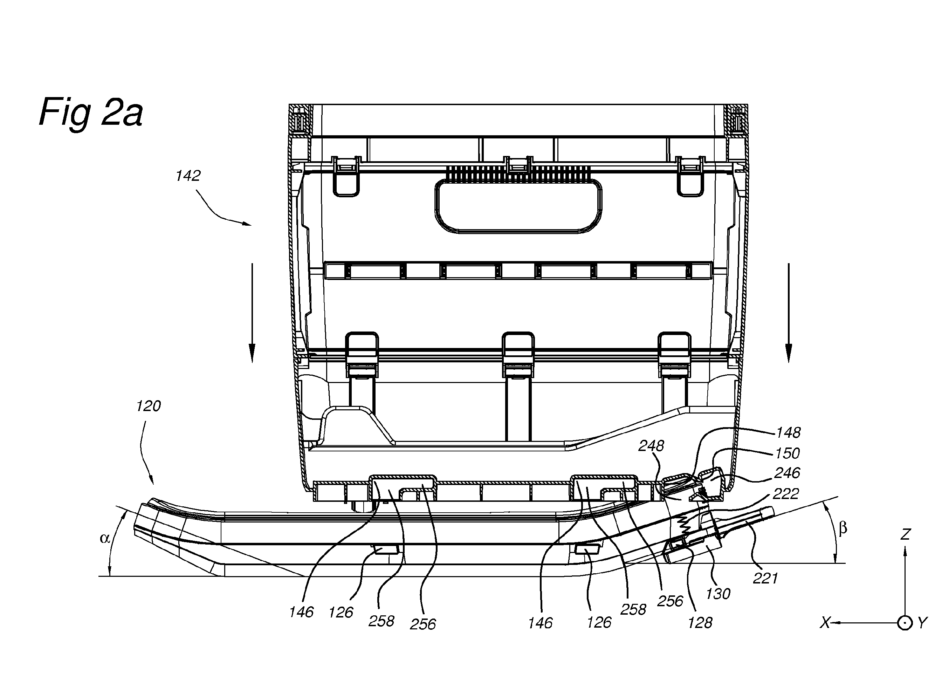

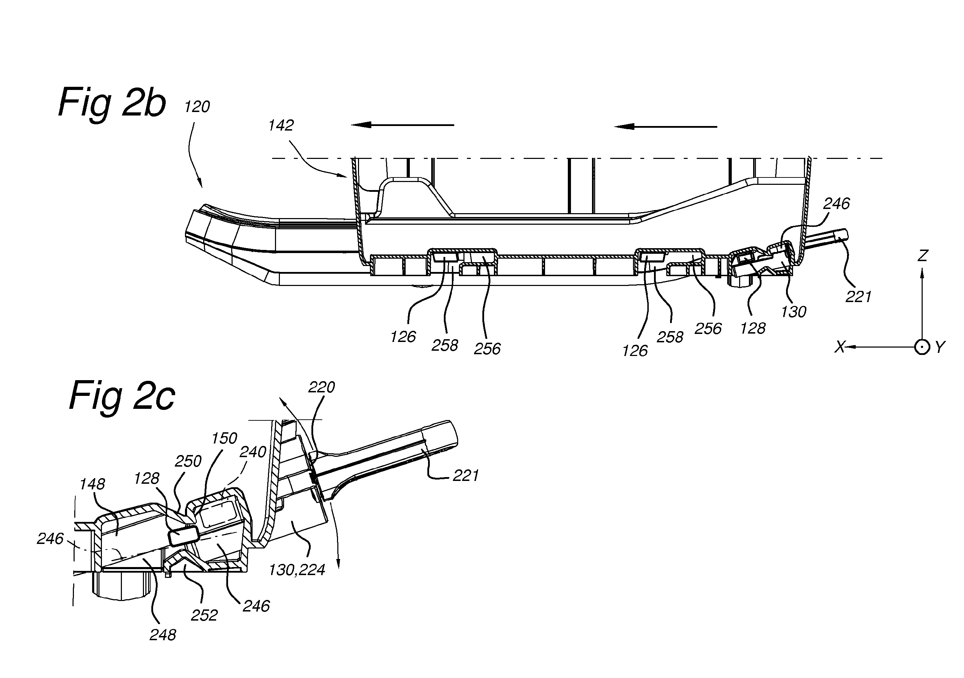

The connection between the holder 140 and the connecting member 120 and interaction between engagement members 126 and the complementary engagement members 146 are further explained with reference to FIG. 2A-2D. In the connecting member 120 shown there, the locking bodies 128 are situated on the longitudinal sides of the connecting member 120 and protude in the latitudinal direction Y. The shown crate 142 has on the bottom side 144 the two recesses 148, each provided with a height guide or vertical notch 248, which transforms into a longitudinal guide or horizontal notch 246. At the end of the longitudinal guide 246, the recess 148 is provided with a vertical stop surface 150. The complementary engagement members 146 are provided with further longitudinal guides 256 and further height guides or vertical notches 258, which are shaped in such a way that the folding crate 142, in a vertical movement with the height guides 248 and the further height guides 258, can be positioned over the locking bodies 128 and the engagement members 126 on top of the base 122. This vertical movement is illustrated by the downward arrow in FIG. 2A. By virtue of a horizontal movement of the folding crate 142 in the longitudinal direction X and over the horizontal plane 106 of the base 122, illustrated by the arrow in FIG. 2B, the locking bodies 128 slide through the longitudinal guides 246, whilst at the same time the engagement members 126 slide through the further longitudinal guides 256.

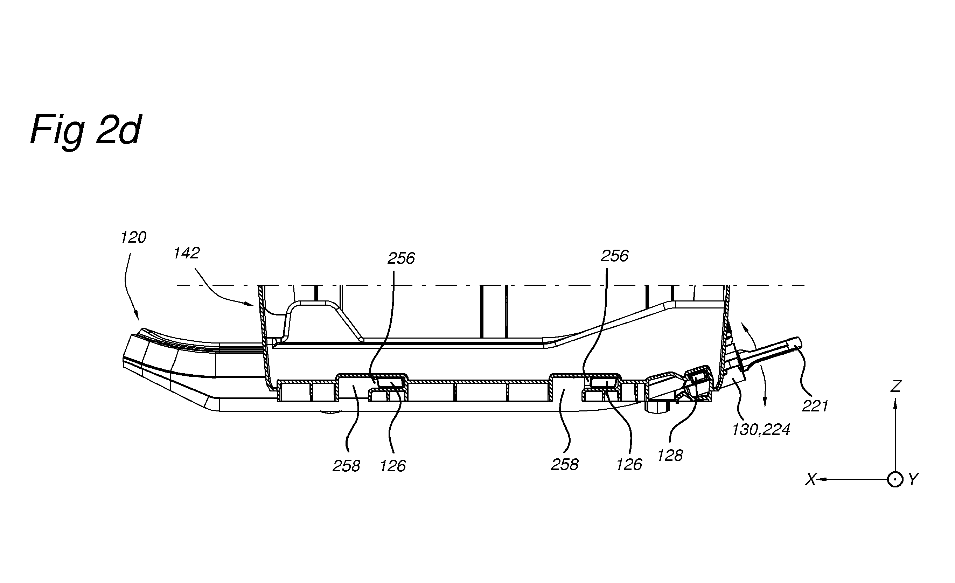

In FIG. 2B-2D, the movement and working of the locking bodies 128 is shown. The locking bodies 128 are movable in the height direction Z, between a released position and a locked position. In FIG. 2A-2D, the locked position of the locking bodies 128 is situated higher than the released position. If the holder 140 is provided on the base 122 of the connecting member 120, the locking bodies 128, positioned in the (lower) released position, will lie free inside the longitudinal guides 246 of the recesses 148. Consequently, the holder 140 remains freely movable in the longitudinal direction X with respect to the base 122. In contrast, the locking bodies 128, in the (higher) locked position, will bear against the vertical stop surfaces 150 in the recesses 148, as shown in FIG. 2D. The locking bodies 128 hence come to be fixed in the longitudinal direction X, so that the holder 140 is secured immovably in the longitudinal direction X with respect to the base 122.

The control mechanism 130 situated on the rear side of the connecting member 120 is provided with a control body 224 in the form of a flattened ledge pointing obliquely rearwards and upwards and having in the middle a locking mechanism 220. The obliquely directed control body 224 is movable with respect to the base 122 and is connected to the locking bodies 128. By a vertical movement of the control body 224 with respect to the base 122, for example by manual control, the locking bodies 128 can be displaced from the locked position into the lower-situated released position, and possibly also back again. In order to facilitate the return movement into the locked position, the connecting member 120 is provided with a spring mechanism 222, which resiliently connects the base 122 and the control body 224 to one another. The state of equilibrium for the spring mechanism 222 is chosen such that the control body 224, and the locking bodies 128 connected thereto, are forced into the locked position unless there is a considerable downward force (i.e. in the negative height direction Z) acting on the control body 224. In the absence of a sufficient negative force (i.e. at rest), the control body 224 is therefore in the upper locked position.

Furthermore, the locking bodies 128, in the locked position, are extendable in the latitudinal direction Y into an extended locked position. When the holder 140 is fastened to the connecting member 120, then the locking bodies 128 in this extended locked position can engage with deepenings 240 provided in the recesses 148 of the holder 140, at the site of the stop surfaces 150, as shown in FIG. 2C. In the extended locked position, the locking bodies 128 also engage with the base 122, so that the control body 224 is fixed with respect to the base 122. A movement of the locking bodies 128 between the locked position and the released position is thus blocked and a rigid, strong connection between holder 140 and base 122 is realized. The control body 224 is immovable as long as the control body 224 and the locking bodies 128 are fixed in the extended locked position, even if a downward force is being applied to the control body 224. The fastening of the control body 224, and thus of the locking bodies 128, is realized in the shown embodiment by the locking mechanism 220 in the middle of a rear side of the control body 224. The locking mechanism 220 is here shown with an insertable key 221 for operating the locking mechanism 220, such that, by turning of the key 221, the locking bodies 128 can be fixed in the released position, the locked position and/or the extended locked position.

In FIG. 2C it is also shown that the recesses 148 in the holder 140 are provided with obliquely running guide profiles 250, 252. Thus, inside the longitudinal guide 246 of the holder 140 is fitted a downward-sloping profile 250, for forcing the locking member 128 present into the released position. Here, the downward-sloping profile 250 is located on a top side of the longitudinal guide 246, so that the locking member 128 present is forced downwards in the direction of the released position as soon as the folding crate 142 is pushed along the longitudinal direction X over the horizontal plane 106, in the direction indicated in FIG. 2B.

Inside the longitudinal guide 246 of the holder 140 is also provided a profile 252, which is triangular or tapered from two longitudinal directions, for forcing the locking member 128 present into the locked position. Here, the tapered profile 252 is located on a bottom side of the longitudinal guide 246, so that the locking member 128 present is forced upwards in the direction of the locked position as soon as the folding crate 142 is moved along the longitudinal direction X (towards the bicycle handlebar) or along an opposite longitudinal direction -X (i.e. away from the bicycle handlebar) over the horizontal plane 106. Here, the opposite longitudinal direction corresponds with a direction opposite to the indicated direction in FIG. 2B. When, in an initial state, the locking bodies 128 are positioned in the released position and the folding crate 142 is positioned onto the holder 140, then movement of the folding crate in the longitudinal direction X will make the locking bodies 128 move through the longitudinal guides 246 over the second profiles 252. Consequently, the locking bodies 128 are forced into the locked state and end up lying against the stop surfaces 150, so that the folding crate 142 is fixed with respect to the base 122. In another initial state, the folding crate 142 is first positioned in a fixed manner on top of the base 122, with the locking bodies 128 up against the stop surfaces 150. When subsequently the locking bodies 128 are positioned in the released position and the folding crate 142 is moved in the opposite longitudinal direction -X over the base 122, then the locking bodies 128 are moved through the longitudinal guides 246 and over the second profiles 252. As a result, the locking bodies 128 will spring back into the locked position. This will not result in fixing of the folding crate 142 onto the base 122, because the locking bodies 128, after the horizontal counter-movement, are no longer close to the stop surfaces 150. The bilaterally tapered profile 252 should therefore, on the one hand, return the control mechanism 130 into the original locked position for a subsequent positioning of the folding crate 142 or another holder 140 onto the base 122 and, on the other hand, set the locking bodies 128 in the locked position if these, when the folding crate 142 is positioned onto the base 122, are initially in the released position.

According to alternative embodiments (not shown) of the connecting member 120, the base 122 can be fastenable in a substantially horizontal plane 106 above a wheel of the bicycle 100. This can be the rear wheel 102 or a front wheel, the presence of the carrier rack 104 (above the front or rear wheel) not being necessary. In stead thereof, the connecting member 120 with the engagement members 126 can be provided with a specially produced connecting piece for fastening the base 122 to an axle and/or to a frame of the bicycle 100. As an alternative, the connecting member 120 can also be permanently fastened to the bicycle 100, for example by means of a bolted or welded joint.

It will be clear that the above-described embodiments are only described by way of example and not in any limiting sense, and that various modifications and adaptations are possible without transcending the scope of the invention, and that the scope is only determined by the appended claims.

### LIST OF REFERENCE SYMBOLS

- 100: bicycle
- 102: rear wheel
- 104: carrier rack
- 106: horizontal plane
- 120: connecting member
- 122: base
- 124: bearing surface
- 126: engagement member
- 127: protusion
- 128: locking body
- 130: control mechanism
- 140: holder
- 142: folding crate
- 144: bottom side
- 145: channel
- 146: complementary engagement member
- 147: horizontal groove
- 148: recess
- 150: stop surface
- 152: handle
- 154: fold-in panel
- 156: folding panel
- X: longitudinal direction
- Y: latitudinal direction
- Z: height direction
- 220: locking mechanism
- 221: key
- 222: spring mechanism
- 224: control body
- 240: deepening
- 246: longitudinal guide
- 248: height guide
- 250: first profile
- 252: second profile
- 256: further longitudinal guide
- 258: further height guide

## Claims

1. Connecting member (120), comprising a base (122) which is fastenable in a substantially horizontal plane (106) of a cycle (100), for example onto a bicycle carrier rack (104), wherein the base (122) comprises engagement members (126) which are shaped to interact with complementary engagement members (146) of a holder (140) such that the holder (140) can be fastened on top of the base (122),
**characterized in that**
the base (122) comprises at least two locking bodies (128) for engaging with at least two recesses (148) in the holder (140), which recesses have a stop surface (150), wherein the locking bodies (128) are movable between a released position, in which the holder (140) can be moved in the longitudinal direction X with respect to the base (122), and a locked position, in which each locking member (128) abuts against the stop surface (150) and the holder (140) is immovable with respect to the base (122).

2. Connecting member (120) according to Claim 1, wherein the locking bodies (128) are situated on both longitudinal sides of the connecting body (120) and protude in a latitudinal direction Y.

3. Connecting member (120) according to Claim 1 or 2, wherein the locking bodies (128) are switchable from the released position into the locked position by movement of the holder (140) in the longitudinal direction X over the base (122).

4. Connecting member (120) according to one of the preceding claims, provided with a spring mechanism (222) for applying a spring force to the locking bodies (128) in the direction of the locked position.

5. Connecting member (120) according to one of the preceding claims, provided with a control mechanism (130) having a control body (224) which is fitted movably with respect to the base (122), and arranged to position the locking bodies (128) in the released position.

6. Connecting member (120) according to one of the preceding claims, wherein the locking bodies (128) in the locked position are extendable in the latitudinal direction Y into an extended locked position, such that the locking bodies (128) engage with deepenings (240) in the recesses (148) of the holder (140) if fastened on top of the base (122).

7. Connecting member (120) according to Claim 6, wherein the control mechanism (130) is provided with a locking mechanism (220) for fixing the locking bodies (128) in at least one of the released position, the locked position and the extended locked position.

8. Holder (140) arranged for fastening to a top side of a base (122) of a connecting member (120), which base can be fastened in a substantially horizontal plane (106) of a cycle (100), for example on top of a bicycle carrier rack (104), wherein the holder (140) comprises complementary engagement members (146), which are shaped to interact with engagement members (126) on the base (122),
**characterized in that**
the holder (140) comprises at least two recesses (148) having a longitudinal guide (246) and a stop surface (150) for engaging with at least two locking bodies (128) of the base (122), such that each locking member (128) in a released position lies free in the longitudinal guide (246) and the holder (140) is movable in the longitudinal direction X with respect to the base (122), and such that each locking member (128) in a locked position abuts against the stop surface (150) and the holder (140) is immovable with respect to the base (122).

9. Holder (140) according to Claim 8, wherein the complementary engagement members (146) and the at least two recesses (148) are provided on a bottom side (144) of the holder (140).

10. Holder (140) according to Claim 8 or 9, wherein the longitudinal guide (246) comprises a first profile (250), for forcing the locking bodies (128) into the released position if the fastened holder (140) is moved in the longitudinal direction X with respect to the base (122).

11. Holder (140) according to one of Claims 8 - 10, wherein the longitudinal guide (246) comprises a second profile (252), for forcing the locking bodies (128) into the locked position if the fastened holder (140) is moved in the longitudinal direction X or an opposite longitudinal direction -X with respect to the base (122).

12. Holder (140) according to one of Claims 8 - 11, shaped as a collapsible crate (142) and on the bottom side (144) provided with a channel (145) for receiving the connecting member (120).

13. Assembly of a connecting member (120) according to one of Claims 1 - 7 and a holder (140) according to one of Claims 8 - 12.

14. Cycle (100), provided with a connecting member (120) according to one of Claims 1 - 7.

15. Cycle (100), provided with an assembly according to Claim 13.
